# EUROPÄISCHE PATENTANMELDUNG

(11) **EP 2 305 492 A1**
(43) Veröffentlichungstag der Anmeldung: **06.04.2011**
(21) Anmeldenummer: 10010112.0
(22) Anmeldetag: 22.09.2010
(51) Int. Cl.: B60G 21/05

(54) **Koppellenkerachse**

(30) Priorität: 02.10.2009 DE 102009048052
(71) Anmelder: Benteler Automobiltechnik GmbH, 33102 Paderborn (DE)
(72) Erfinder: Schröder, Aloys, 33100 Paderborn (DE)
(74) Vertreter: Griepenstroh, Jörg

(57) **Zusammenfassung**

Die Erfindung betrifft eine Koppellenkerachse (1) umfassend einen Querträger (4) über welchen Seitenarme (5) untereinander verbunden sind, wobei die Seitenarme (5) an ihrem einen Ende eine Lageranbindung (6) und an ihrem anderen Ende eine Radträgereinheit (7, 7a, 7b) aufweisen. Der sich zwischen Lageranbindung (6) und Radträgereinheit (7, 7a, 7b) erstreckende Seitenarmabschnitt (8) ist ein Blechbauteil, während die Radträgereinheit (7, 7a, 7b) als Gussteil ausgeführt ist. Erfindungsgemäß weist die Radträgereinheit (7, 7a, 7b) zumindest bereichsweise eine Wandstärke (D) kleiner als 6 mm auf und greift stirnseitig in den Seitenarmabschnitt (8). Die Wandstärke (D) weist eine mittlere Abweichung von < 50 % der mittleren Wandstärke auf.

## Beschreibung

Die Erfindung betrifft eine Koppellenkerachse umfassend einen Querträger sowie über Seitenarme am Querträger angeordnete Radträgereinheiten mit den Merkmalen im Oberbegriff von Patentanspruch 1.

Zum Stand der Technik zählen Koppellenkerhinterachsen für Kraftfahrzeuge, beispielsweise beschrieben in der DE 100 64 438 A1, die aus zwei Seitenarmen und einem die Seitenarme verbindenden Torsionsprofil oder Querlenker bestehen, wobei die Seitenarme wiederum Gummilager aufnehmen und eine Anschraubplatte für die Radlagerung aufweisen.

Die EP 2 116 401 A1 offenbart ebenfalls eine Koppellenkerhinterachse, deren durch ein Torsionsprofil verbundene Seitenarme jeweils endseitig eine Lageranbindung und eine Radlagerung aufweisen. Die Radlagerung greift jeweils stirnseitig in die Seitenarme.

Koppellenkerhinterachsen werden hauptsächlich für Hinterlastachsen zwischen 600 kg bis 1.300 kg und Fahrzeugspurbreiten von ca. 1.300 mm bis ca. 1.600 mm ausgelegt. Hierbei werden die Koppellenkerhinterachsen jeweils mit allen Komponenten an die unterschiedlichen Fahrzeugspurbreiten oder Hinterachslasten angepasst.

Ausgehend von diesem Stand der Technik liegt der Erfindung die Aufgabe zu Grunde, den Aufbau einer Koppellenkerachse variabler zu gestalten und eine einfache Anpassung an Fahrzeugtypen mit unterschiedlicher Spurbreite zu ermöglichen.

Die Lösung dieser Aufgabe besteht in einer Koppellenkerachse mit den Merkmalen des Patentanspruchs 1 sowie einem System für Koppellenkerachsen mit den Merkmalen des Patentanspruchs 12.

Vorteilhafte Ausgestaltungen des Erfindungsgedankens sind Gegenstand der abhängigen Ansprüche.

Die erfindungsgemäße Koppellenkerachse umfasst einen Querträger, über welchen Seitenarme miteinander verbunden sind. Die Seitenarme weisen an ihrem einen Ende eine Lageranbindung und an ihrem anderen Ende eine Radträgereinheit auf. Die Radträgereinheit ist als Gussteil ausgeführt. Vorzugsweise kommt Stahlguss zum Einsatz, da dieser gut schweißbar ist und somit den Einsatz einfacher stoffschlüssiger Verbindungstechniken ermöglicht. Der sich zwischen Lageranbindung und Radträgereinheit erstreckende Seitenarmabschnitt ist als Blechbauteil ausgeführt. Im Rahmen der Erfindung wird unter Blechbauteil sowohl ein einteiliges oder mehrteiliges Profil aus Blech, insbesondere Stahlblech, als auch ein Rohrbauteil verstanden. Das Blechbauteil kann insbesondere auch hydrogeformt sein.

Erfindungsgemäß ist die Radträgereinheit jeweils endseitig der beiden Seitenarme angeordnet, wobei sie stirnseitig in den jeweiligen Seitenarmabschnitt greift. Das Gussteil kann vorteilhafterweise in den weniger belasteten Bereichen sehr dünnwandig ausgeführt sein, wodurch sich das Gewicht der Radträgereinheit verringert. Dünnwandig bezeichnet, im Sinne der Erfindung, Wandstärken mit einer Dicke kleiner 6 mm. Ein Vorteil bei der Herstellung der Radträgereinheit als Gussteil besteht darin, dass eine Abweichung der Wandstärken von der mittleren Wandstärke von weniger als 50 % erreicht werden kann.

Die Radträgereinheit weist einen Anbindungszapfen zur Festlegung am Seitenarmabschnitt auf. Der Anbindungszapfen ist ebenfalls Bestandteil des Gussteils. Zur Gewichtsoptimierung ist der Anbindungszapfen der Radträgereinheit als Hohlprofil ausgeführt.

Der Seitenarmabschnitt ist als Hohlprofil ausgeführt, welches mit dem Anbindungszapfen der Radträgereinheit in Eingriff steht.

Der Anbindungszapfen kann beispielsweise innerhalb des Hohlprofils des Seitenarmabschnitts angeordnet sein. Es ist aber ebenso denkbar, dass der Anbindungszapfen den Seitenarmabschnitt umgreift. Die Anbindung der Radträgereinheit an den Seitenarmabschnitt erfolgt vorzugsweise durch ein stoffschlüssiges Verfahren. Vorteilhafterweise wird die Radträgereinheit an dem Seitenarmabschnitt angeschweißt. Der Anbindungszapfen mündet mit seinem dem Seitenarmabschnitt abgewandtem Ende in eine Stirnplatte,

Die Erfindung ermöglicht eine Modulbauweise einer Koppellenkerachse bzw. schafft eine Koppellenkerachse in Modulbauweise, bei welcher auf einen Grundkörper, bestehend aus den Seitenarmen und dem Querträger, zurückgegriffen werden kann. Der Grundkörper kann jeweils durch Kopplung mit verschieden ausgelegten Radträgereinheiten modifiziert werden. Auf diese Weise erfolgt eine Anpassung bzw. Auslegung der Koppellenkerachse auf Kraftfahrzeuge mit unterschiedlicher Spurbreite.

Die Radträgereinheit weist weiterhin eine Anschraubplatte für die Radlagerung auf. Die Anschraubplatte für die Radlagerung kann optional auch für die Anschraubung eines Bremssattels für eine Scheibenbremse ausgelegt werden. Diese Anschraubplatte ist Bestandteil des Gussteils und wird zusammen mit der Radträgereinheit hergestellt. Die Radträgereinheit wird zur Gewichtsreduzierung vorzugsweise aus dünnwandigem Stahlguss hergestellt.

Vorteilhaft ist es darüber hinaus, wenn Durchgangsöffnungen für Gewinde in der Anschraubplatte ebenfalls während des Giessprozesses zur Herstellung der Radträgereinheit erzeugt werden. Hierbei ist es gleichfalls möglich, die Anschraubplatte im Bereich der Durchgangsöffnungen dicker auszuführen, um eine ausreichende Klemm- oder Verschraubungslänge zu erhalten. So kann die Anschraubplatte trotz Leichtbauweise beanspruchungsgerecht ausgelegt werden.

Die Anschraubplatte schließt sich in einem Winkel an eine Querseite der Stimplatte des Anbindungszapfens an. Dabei schließen die Anschraubplatte und die Stirnplatte vorzugsweise einen Winkel von etwa 90° ein. Vorteilhafterweise haben Stirnplatte und Anschraubplatte die gleichen Wandstärken. Zur Stabilisierung der Radträgereinheit sind zwischen der Stirnplatte und der Anschraubplatte Stützwände vorgesehen. Diese Stützwände sind vorzugsweise dreieckförmig ausgestaltet. Dabei sind die Stützwände derart zwischen Stirnplatte und Anschraubplatte angeordnet, dass sie Längsseiten der Anschraubplatte mit aneinander grenzenden Längsseiten der Stirnplatte verbinden, so dass eine Art Tasche entsteht. Durch diese Ausgestaltung sind die Verschraubungen zur Festlegung eines Radlagers oder Radlagerzapfens von der zur gegenüberliegenden Radträgereinheit weisenden Seite der Anschraubplatte leicht zugänglich.

Die Stützwände sorgen für eine gleichmäßige Kraftverteilung und verstärken die Radträgereinheit in leichtbauender Weise. Die Stützwände sind ebenfalls Bestandteil des Gussteils. Vorteilhafterweise wird die Wandstärke der Stützwände gleich der Wandstärke von Anschraubplatte und Stirnplatte gewählt.

Zur Anpassung einer Koppellenkerachse an verschiedene Spurbreiten ist ein System einer Koppellenkerachse vorgesehen. Die Koppellenkerachse für dieses System umfasst einen Querträger, über welchen Seitenarme miteinander gekoppelt sind. Ein erstes Ende des Seitenarms besteht in einer Lageranbindung. Ein zweites Ende des Seitenarms wird durch eine Radträgereinheit gebildet. Dabei sind Lageranbindung und Radträgereinheit durch einen als Blechbauteil ausgeführten Seitenarmabschnitt miteinander verbunden. Das zweite Ende des Seitenarmabschnitts ist derart ausgelegt, dass verschiedenen Radträgereinheiten angeordnet werden können. Die verschiedenen Radträgereinheiten sind für unterschiedliche Spurbreiten ausgelegt und mit einheitlichen Anbindungszapfen versehen. Der Unterschied zwischen den verschiedenen Radträgereinheiten besteht insbesondere im Abstand zwischen der Anschraublatte und dem Anbindungszapfen.

Kennzeichnend ist, dass die Anbindungszapfen der verschiedenen Radträgereinheiten gleich ausgestaltet sind, wodurch alle Radträgereinheiten mit dem zweiten Ende des Seitenarmabschnitts koppelbar sind. Somit wird es möglich Koppellenkerachsen eines Typs durch Anbindung verschiedener Radträgereinheiten für unterschiedliche Spurbreiten auszulegen.

Die Erfindung wird nachfolgend anhand eines in den Figuren dargestellten Ausführungsbeispiels näher erläutert. Es zeigen:
- Figur 1: eine Radträgereinheit in perspektivischer Darstellung und
- Figuren 2a und 2b: ein Abschnitt einer Koppellenkerachse.

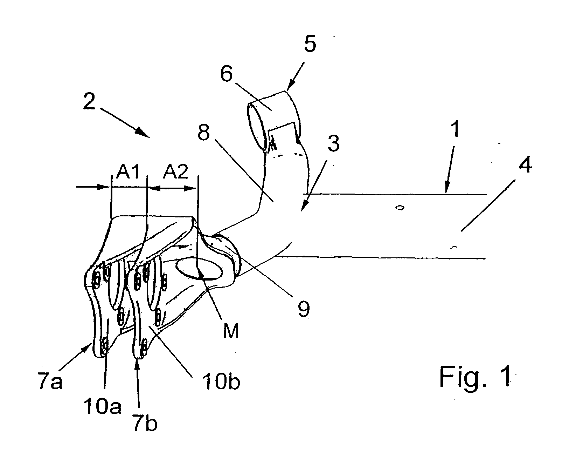

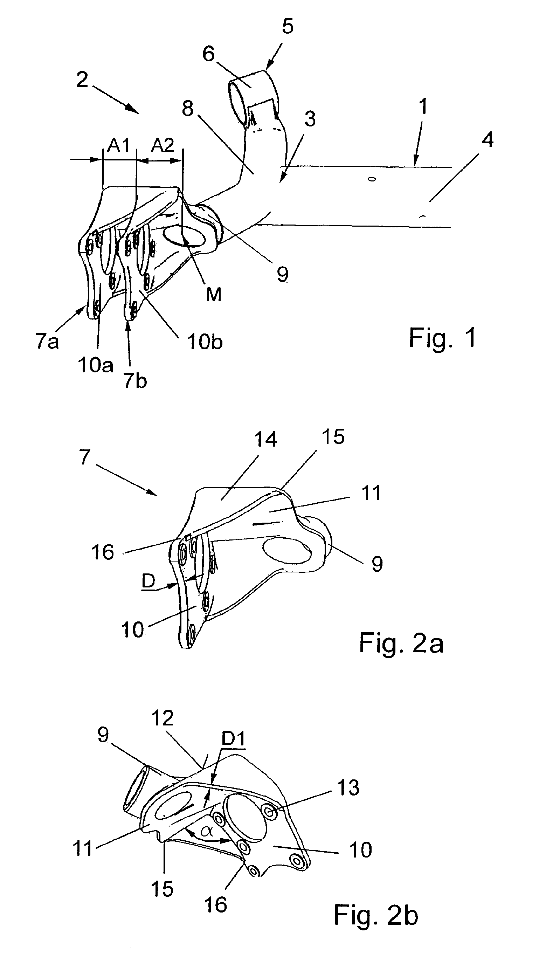

Figur 1 zeigt einen Ausschnitt einer Koppellenkerachse 1, die in Modulbauweise aus einem System 2 aufgebaut ist. An einem Ende 3 des teilweise dargestellten Querträgers 4 ist ein Seitenarm 5 angeordnet. Ein erstes Ende des Seitenarms 5 bildet eine Lageranbindung 6. Ein zweites Ende des Seitenarms 5 bildet eine Radträgereinheit 7a, 7b. Der sich zwischen Lageranbindung 6 und Radträgereinheit 7a, 7b erstreckende Seitenarmabschnitt 8 ist ein als Hohlprofil ausgeführtes Blechbauteil. Dabei greift ein Anbindungszapfen 9 der Radträgereinheit 7a, 7b vorzugsweise formschlüssig in ein Ende des Seitenarmabschnitts 8 ein. Die Festlegung der Radträgereinheit 7a, 7b am Seitenarmabschnitt 8 erfolgt durch eine stoffschlüssige Verbindung.

Das in Modulbauweise aufgebaute System 2 für eine Koppellenkerachse 1 ermöglicht die Auslegung für verschiedene Spurbreiten. Zur beispielhaften Verdeutlichung realisierbarer Spurbreiten ist die Anordnung von zwei Radträgereinheiten 7a, 7b an einem Ende des Seitenarmabschnitts 8 durch bildliche Überlagerung dargestellt. Es ist zu erkennen, dass die Abstände A1, A2 zwischen Anschraubplatten 10a, 10b der Radträgereinheit 7a, 7b und der Mitte M des Anbindungszapfens 9 unterschiedlich ausgestaltet sein können.

Beide Radträgereinheiten 7a, 7b sind über ihren Anbindungszapfen 9 mit dem Seitenarmabschnitt 8 koppelbar.

Die in Figur 2a und 2b perspektivisch dargestellte Radträgereinheit 7 ist zur Anordnung an einem zweiten Ende eines Seitenarms 5 vorgesehen. Die Radträgereinheit 7 ist knotenstückartig mit einer Stirnplatte 11 und einer Anschraubplatte 10 ausgestaltet. Stirnplatte 11 und Anschraubplatte 10 sind zueinander in einem Winkel α angeordnet. Dieser Winkel beträgt hier etwa 90°. An einer von der Anschraubplatte 10 weg weisenden Seite 12 der Stirnplatte 11 ist ein Anbindungszapfen 9 angeformt. Der Anbindungszapfen 9 ist zur Gewichtsoptimierung hohl ausgestaltet und dient der Verbindung der Radträgereinheit 7 mit einem Seitenarmabschnitt 8 der Koppellenkerachse 1 (Figur 1). Die Gewinde der Durchgangsöffnungen 13 der Anschraubplatte 10 sind ebenfalls Bestandteil des Gussteils.

Die Stirnplatte 11 und die Anschraubplatte 10 weisen in diesem Ausführungsbeispiel eine gleiche Wandstärke D auf.

Zur Erhöhung der Festigkeit der Radträgereinheit 7 sind die Stirnplatte 11 des Anbindungszapfens 9 und die Anschraubplatte 10 über Stützwände 14 miteinander verbunden. Die Stützwände 14 sind ebenfalls Bestandteil des Gussteils. Eine Wandstärke D1 der Stützwände 14 ist in dieser Ausführungsform der Wandstärke D von Stirnplatte 11 und Anschraubplatte 10 angepasst. Vorzugsweise sind die Stützwände 14, wie hier dargestellt, dreieckförmig ausgestaltet. Die Stützwände 14 erstrecken sich zwischen den aneinander grenzenden Längsseiten 15, 16 von Stirnplatte 11 und Anschraubplatte 10. Die Radträgereinheit 7 ist durch diese Stützwände 14 taschenförmig ausgestaltet. Die Funktion der Stützwände 14 besteht vorzugsweise in der Stabilisierung der Koppellenkerachse 1 durch Unterstützung einer gleichmäßigen Kraftübertragung zwischen Anschraubplatte 10 und Seitenarmabschnitt 8.

### Bezugszeichen:

- 1 -: Koppellenkerachse
- 2 -: System
- 3 -: Ende v. 4
- 4 -: Querträger
- 5 -: Seitenarm
- 6 -: Lageranbindung
- 7 -: Radträgereinheit
- 7a -: Radträgereinheit
- 7b -: Radträgereinheit
- 8 -: Seitenarmabschnitt
- 9 -: Anbindungszapfen
- 10 -: Anschraubplatte
- 10a -: Anschraubplatte
- 10b -: Anschraubplatte
- 11 -: Stirnplatte
- 12-: Seite
- 13 -: Durchgangsöffnung
- 14 -: Stützwand
- 15 -: Längsseite
- 16 -: Längsseite

- A1 -: Abstand
- A2 -: Abstand
- D -: Wandstärke
- D1 -: Wandstärke
- M -: Mitte v. 9
- α -: Winkel

## Patentansprüche

1. Koppellenkerachse umfassend einen Querträger (4) über welchen Seitenarme (5) miteinander verbunden sind, wobei die Seitenarme (5) an ihrem einen Ende eine Lageranbindung (6) und an ihrem anderen Ende eine Radträgereinheit (7, 7a, 7b) aufweisen, wobei der sich zwischen Lageranbindung (6) und Radträgereinheit (7, 7a, 7b) erstreckende Seitenarmabschnitt (8) ein Blechbauteil ist und die Radträgereinheit (7, 7a, 7b) als Gussteil ausgeführt ist und stirnseitig in den Seitenarmabschnitt (8) greift, **dadurch gekennzeichnet, dass** die Radträgereinheit (7, 7a, 7b) zumindest bereichsweise eine Wandstärke (D) kleiner als 6 mm aufweist, wobei die Wandstärke (D) eine mittlere Abweichung von < 50 % der mittleren Wandstärke aufweist.

2. Koppellenkerachse nach Anspruch 1, **dadurch gekennzeichnet, dass** das Gussteil aus Stahlguss besteht.

3. Koppellenkerachse nach Anspruch 1 oder 2, **dadurch gekennzeichnet, dass** der Seitenarmabschnitt (8) ein Hohlprofil ist, welches mit einem Anbindungszapfen (9) der Radträgereinheit (7, 7a, 7b) in Eingriff steht.

4. Koppellenkerachse nach einem der Ansprüche 1 bis 3, **dadurch gekennzeichnet, dass** der Anbindungszapfen (9) hohl ist.

5. Koppellenkerachse nach einem der Ansprüche 1 bis 4, **dadurch gekennzeichnet, dass** Radträgereinheit (7, 7a, 7b) und Seitenarmabschnitt (8) stoffschlüssig miteinander verbunden sind.

6. Koppellenkerachse nach einem der Ansprüche 1 bis 5, **dadurch gekennzeichnet, dass** an der Radträgereinheit (7, 7a, 7b) eine Anschraubplatte (10, 10a, 10b) angeordnet ist.

7. Koppellenkerachse nach einem der Ansprüche 3 bis 6, **dadurch gekennzeichnet, dass** am Anbindungszapfen (9) eine Stirnplatte (11) angeordnet ist.

8. Koppellenkerachse nach Anspruch 7, **dadurch gekennzeichnet, dass** die Anschraubplatte (10, 10a, 10b) in einem Winkel (a) an die Stirnplatte (11) angeordnet ist.

9. Koppellenkerachse nach einem der Ansprüche 6 bis 8, **dadurch gekennzeichnet, dass** die Anschraubplatte (10, 10a, 10b) Bestandteil des Gussteils ist.

10. Koppellenkerachse nach einem der Ansprüche 6 bis 9, **dadurch gekennzeichnet, dass** Gewinde in Durchgangsöffnungen (13) der Anschraubplatte (10, 10a, 10b) Bestandteile des Gussteils sind.

11. Koppellenkerachse nach einem der Ansprüche 7 bis 9, **dadurch gekennzeichnet, dass** zwischen der Stirnplatte (11) und der Anschraubplatte (10, 10a, 10b) Stützwände (14) vorgesehen sind.

12. System für eine Koppellenkerachse (1) nach einem der vorhergehenden Ansprüche, **dadurch gekennzeichnet, dass** die Seitenarmabschnitte (8) mit unterschiedlichen Radträgereinheiten (7, 7a, 7b) koppelbar sind.

13. System nach Anspruch 12, **dadurch gekennzeichnet, dass** die unterschiedlichen Radträgereinheiten (7, 7a, 7b) verschiedene Abstände (A1, A2) zwischen einer Anschraubplatte (10, 10a, 10b) und einem Anbindungszapfen (9) aufweisen.
